# EUROPÄISCHE PATENTSCHRIFT

(11) **EP 1 333 276 B1**
(45) Veröffentlichungstag und Bekanntmachung des Hinweises auf die Patenterteilung: **23.09.2009**
(21) Anmeldenummer: 02028838.7
(22) Anmeldetag: 23.12.2002
(51) Int. Cl.: G01N 29/02, G01H 3/10, G01N 29/22, G01L 23/10

(54) **Verfahren und Vorrichtung zur Kavitationsdetektion**
Method and apparatus for detection of cavitation
Procedure et appareil pour la detection des cavitations

(30) Priorität: 17.01.2002 DE 10201662
(43) Veröffentlichungstag der Anmeldung: 06.08.2003
(73) Patentinhaber: µ-Sen GmbH, 07407 Rudolstadt (DE)
(72) Erfinder: Iwert, Thomas, 39307 Genthin (DE); Fritsch, Holger, 39112 Magdeburg (DE); Biehl, Steffen, Dr., 07407 Kirchhasel (DE)
(74) Vertreter: Hertz, Oliver

(56) Entgegenhaltungen:
- DE-A1- 19 517 289
- DE-A1- 19 841 946
- DE-A1- 19 947 129
- PEINER E ET AL: "Micromachined resonator for cavitation sensing" SENSORS AND ACTUATORS A, ELSEVIER SEQUOIA S.A., LAUSANNE, CH, Bd. 76, Nr. 1-3, 30. August 1999 (1999-08-30), Seiten 266-272, XP004184447 ISSN: 0924-4247

## Beschreibung

Die Erfindung betrifft Verfahren zur Kavitationsdetektion an strömungstechnischen Vorrichtungen, insbesondere an Flüssigkeitspumpen, und Vorrichtungen zur Umsetzung der Verfahren.

Mit Kavitation bezeichnet man die Bildung und nachfolgend schlagartige Kondensation von Dampfblasen in strömenden Flüssigkeiten, hervorgerufen durch abrupte Geschwindigkeitsänderungen (Hohlsog). Kavitation tritt zum Beispiel auf Turbinenschaufeln, Pumpenteilen oder Schiffsschrauben auf. Beispielsweise kommt es beim Teil- oder Überlastbetrieb in einer Flüssigkeitspumpe zu einer starken Drucksenkung in der Flüssigkeit. Wenn dabei der Dampfdruck der Flüssigkeit unterschritten wird, bilden sich zeitlich und räumlich instabile, dampfgefüllte Hohlräume. Kavitation ist unerwünscht, da es zu einer Verringerung des Pumpenwirkungsgrades, zur Geräuschentwicklung und zur Werkstoffbelastung kommt. In der Nähe einer Kavitationsstelle kommt es zu Materialbelastungen, die bis zur mechanischen Zerstörung führen können.

Das Auftreten von Kavitation hängt von den Betriebsparametern der jeweiligen strömungstechnischen Anlage ab. Es besteht ein Interesse, Anlagen so zu betreiben, dass eine Kavitation vermieden oder quantitativ erfasst wird, um die genannten Probleme zu vermeiden und insbesondere um die Lebensdauer und Sicherheit der Anlage zu erhöhen oder eine Restlebensdauer abzuschätzen.

Herkömmliche Verfahren zur Kavitationsdetektion basieren allgemein auf Schall- oder Schwingungsmessungen. Es ist beispielsweise eine frequenzselektive Schwingungsmessung vorgesehen, um Kavitation anhand vorbestimmter Schwingungsparameter zu detektieren. Aus DE-OS 198 41 946 und dem Artikel "Micromachined resonator for cavitation sensing" von E. Peiner et. al., Sensors and Actuators 76 (1999) 266-272 ist ein Verfahren zur Kavitationsdetektion bekannt, bei dem eine Schwingungsmessung mit einem niederfrequenten Feder-Masse-Dämpfungssystem erfolgt. Die schwingungsfähige Masse dieses Sensors besitzt verschiedene Bewegungsmodi, die beim Auftreten von Kavitation in charakteristischer Weise miteinander gekoppelt und in Schwingungsspektren detektierbar sind. Dieses herkömmliche Verfahren besitzt mehrere Nachteile. Erstens ist das herkömmliche Verfahren an die Verwendung eines kompliziert aufgebauten Sensors gebunden. Des Weiteren ist die Signalauswertung aufwendig. Es werden zwingend elektrische Filterschaltungen zur Suche nach Schwingungsmaxima entsprechend mindestens eines angeregten Bewegungsmodes und zur Signalseparation benötigt. Schließlich setzt die Signalauswertung Erfahrungen mit der jeweils untersuchten Anlage voraus.

Es ist die Aufgabe der Erfindung, ein verbessertes Verfahren zur Kavitationsdetektion auf der Grundlage von Schwingungsmessungen bereitzustellen, mit dem die Nachteile herkömmlicher Verfahren überwunden werden und das sich insbesondere durch einen vereinfachten Messaufbau, eine vereinfachte Signalauswertung und eine hohe Empfindlichkeit und Reproduzierbarkeit der Detektion auszeichnet. Die Aufgabe der Erfindung ist es auch, Vorrichtungen zur Umsetzung der Verfahren anzugeben.

Diese Aufgaben werden mit Verfahren und Vorrichtungen mit den Merkmalen gemäß den Patentansprüchen 1 und 8 gelöst. Vorteilhafte Ausführungsformen ergeben sich aus den abhängigen Ansprüchen.

Die Grundidee der Erfindung ist es, bei einem Verfahren zur Kavitationsdetektion an einer strömungstechnischen Vorrichtung mindestens zwei richtungsselektive Schwingungsmessungen durchzuführen, bei denen an einem Bauteil der Vorrichtung in einem vorbestimmten Frequenzbereich Schwingungsamplituden entsprechend mindestens zwei verschiedenen Schwingungsrichtungen gemessen werden. Zur Detektion von Kavitation wird aus den Schwingungsamplituden oder aus Größen, die von Schwingungsamplituden abgeleitet sind, wie z. B. Mittelwerte oder Effektivwerte, ein Kennwert erfasst, der für das Auftreten der Kavitation charakteristisch ist. Die erfindungsgemäße Schwingungsmessung erfolgt in einem vorbestimmten Frequenzbereich, in den eine Strukturresonanz oder ein anderes, im Körperschall des Bauteils auftretendes, von außen aufgeprägtes Frequenzband (sogenanntes Anregungsband) des Bauteils fällt, an dem die Schwingungsmessungen durchgeführt werden. Eine Strukturresonanz ist eine charakteristische Frequenz, bei der das betreffende Bauteil eine Eigenfrequenz oder Resonanz besitzt. Das Anregungsband wird zum Beispiel durch eine Fremdanregung verursacht, die von einem äußeren System über die strömungstechnische Vorrichtung oder das strömende Medium auf das Bauteil übertragen wird. Der Kennwert ist je nach Anwendungsfall durch mindestens eine arithmetische Verknüpfung, z. B. Quotient, Produkt, Summe und/oder Differenz, der Schwingungsamplituden gebildet. Die Erfinder haben festgestellt, dass insbesondere die genannten Quotienten von Amplituden oder abgeleiteten Größen oder andere arithmetische Verknüpfungen, die bei gleichen Frequenzen, jedoch verschiedenen Schwingungsrichtungen ermittelt werden, überraschenderweise eine starke Empfindlichkeit vom Auftreten von Kavitation aufweisen. Vorteilhafterweise kann anstelle der herkömmlichen Ermittlung von Amplitudenverhältnissen entsprechend verschiedenen Bewegungsmodi eines Feder-Masse-Dämpfungssystems mit erheblich verringertem Aufwand eine Messung von Grundmoden verschiedener Schwingungen erfolgen, deren Parameter direkt miteinander arithmetisch verknüpft werden und mit einem Referenzwert verglichen eine Aussage über Kavitation ermöglichen.

Gemäß einer bevorzugten Ausführungsform der Erfindung wird das Verfahren an einer strömungstechnischen Vorrichtung mit einer rotierenden Antriebswelle durchgeführt, wobei die zwei richtungsselektiven Schwingungsmessungen eine axiale Schwingungsmessung, bei der Schwingungen parallel zur Ausrichtung der Drehachse der Antriebswelle erfasst werden, und eine radiale Schwingungsmessung umfassen, bei der relativ zur Drehachse radiale Schwingungen erfasst werden. Die senkrecht aufeinanderstehenden, axialen und radialen Schwingungen in einem Resonanzbereich des Bauteils, an dem die Schwingungsmessungen durchgeführt werden, haben sich als ein besonders empfindlicher Indikator für das Auftreten von Kavitation erwiesen.

Zur Durchführung der Schwingungsmessung werden breitbandige Sensoren mit nachgeordneten elektronischen Filtern oder spektral auf die Resonanz des jeweiligen Bauteils ausgelegte Sensoren verwendet. Im ersten Fall ergeben sich Vorteile dahingehend, dass ein breitbandiger Sensor mit dem Filter ohne weiteres an die konkrete Aufgabenstellung und insbesondere die strömungstechnische Vorrichtung angepasst werden kann. Des Weiteren kann der Filter auf verschiedene Resonanzen des Bauteils, an dem die Sensoren angebracht sind, angepasst werden. Die elektronische Filterung ist dabei erheblich unkomplizierter als beim oben genannten herkömmlichen Verfahren. Bei der Verwendung spektral auf bestimmte Resonanzen zugeschnittene Sensoren ergibt sich eine Vereinfachung des Messaufbaus. Vorteilhafterweise hat sich gezeigt, dass es bei der Verwendung schmalbandiger Sensoren nicht auf die exakte Abstimmung auf eine bestimmte Resonanzfrequenz des tragenden Bauteils ankommt. Die Erfinder haben festgestellt, dass die kavitationsbedingt angeregten Strukturresonanzen relativ breitbandig sind.

Ein Gegenstand der Erfindung ist auch eine Vorrichtung zur Kavitationsdetektion, die zur Umsetzung der oben genannten Verfahren eingerichtet ist und insbesondere eine Sensoreinrichtung zur Durchführung von mindestens zwei richtungsselektiven Schwingungsmessungen und eine Auswertungseinrichtung zur Ermittlung mindestens eines Kennwertes, z. B. Quotienten, aus den Schwingungsamplituden oder davon abgeleiteten Größen entsprechend den verschiedenen Schwingungsrichtungen umfasst. Die Sensoreinrichtung weist zwei breit- oder schmalbandige Sensoren auf, die so ausgerichtet an einem Bauteil einer schwingungstechnischen Vorrichtung angebracht sind, dass mit ihnen Schwingungsamplituden entsprechend verschiedenen, vorzugsweise senkrecht aufeinander stehenden Richtungen ermittelt werden können. Die erfindungsgemäße Vorrichtung besitzt gegenüber herkömmlichen Messanordnungen insbesondere den Vorteil eines vereinfachten Aufbaus mit an sich verfügbaren Sensoren, an deren Konstruktion keine besonderen Anforderungen gestellt werden müssen.

Die Erfindung besitzt die folgenden weiteren Vorteile. Mit dem erfindungsgemäßen Verfahren kann Kavitation nicht nur qualitativ detektiert, sondern auch quantitativ beurteilt werden. Durch die Kennwertbildung (insbesondere Quotienten-, Produkt-, Summenund/oder Differenzbildung) wird eine Unterdrückung kavitationsunabhängiger Störgrößen (z. B. Lagerschäden) bei der Messung ermöglicht. Es kann zwischen beginnenden, schwachen Kavitationserscheinungen und starker Kavitation (Vollabriss) unterschieden werden. Die Erfindung besitzt eine breite Anwendbarkeit bei den verschiedensten strömungstechnischen Vorrichtungen, wie z. B. Flüssigkeitspumpen, insbesondere Kreiselpumpen, Strömungsmaschinen, Armaturen und dergleichen.

Weitere Vorteile und Einzelheiten der Erfindung werden im Folgenden unter Bezug auf die beigefügten Zeichnungen beschrieben. Es zeigen:
- Figur 1:: eine schematische Darstellung einer strömungstechnischen Anlage, die mit einer erfindungsgemäßen Vorrichtung zur Detektion von Kavitation ausgestattet ist, und
- Figur 2:: Kurvendarstellungen zur Illustration des erfindungsgemäßen Verfahrens.

Die Erfindung wird im Folgenden beispielhaft unter Bezug auf eine Vorrichtung zur Kavitationsdetektion (Kavitationsdetektor) beschrieben, die für zwei Schwingungsmessungen entsprechend zwei verschiedenen Schwingungsrichtungen an einem Bauteil einer strömungstechnischen Vorrichtung ausgelegt ist. Die Erfindung ist jedoch auf die Kombination von zwei Schwingungsmessungen nicht beschränkt, sondern auch mit drei oder mehr richtungsselektiven Messungen durchführbar, die insbesondere bei strömungstechnischen Vorrichtungen mit kompliziertem Aufbau, z. B. mit verschieden ausgerichteten Antriebsteilen, vorgesehen sind. Des Weiteren wird betont, dass die erfindungsgemäße Schwingungsmessung nicht an bestimmten, unten beispielhaft angegebenen Bauteilen durchgeführt werden muss, sondern allgemein an allen Komponenten einer strömungstechnischen Vorrichtung durchführbar ist, auf die sich der Körperschall während des Betriebs der Vorrichtung überträgt und die eine auswertbare Strukturresonanz oder ein auswertbares Anregungsband besitzen.

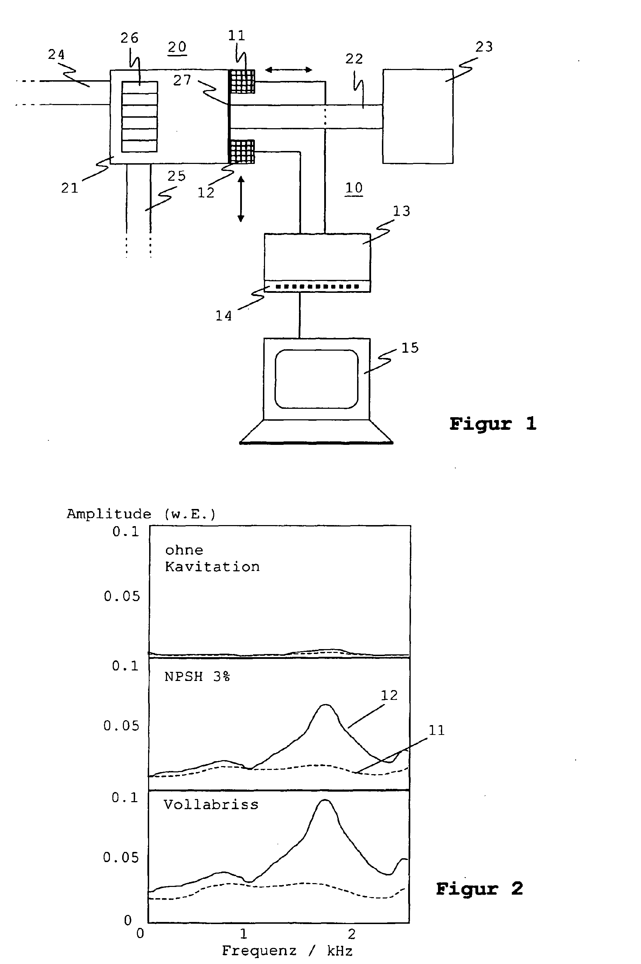

Figur 1 illustriert einen erfindungsgemäßen Kavitationsdetektor 10, der an einer strömungstechnischen Vorrichtung 20 angebracht ist. Der Kavitationsdetektor 10 umfasst zwei Schwingungssensoren 11, 12, die mit einer Auswertungseinrichtung 13 verbunden sind.

Die Auswertungseinrichtung 13 umfasst je nach Aufgabenstellung der Kavitationsdetektion eine Signaleinrichtung 14 und/oder eine Steuerung 15 (z. B. Rechnersteuerung). Die strömungstechnische Vorrichtung 20 wird beispielsweise durch eine Kreiselpumpe mit einem Pumpengehäuse 21, einer Antriebswelle 22 (in einem nicht gezeigten Gehäuse) und einem Antrieb 23 gebildet. Die Bezugszeichen 24 und 25 verweisen auf schematisch illustrierte Zu- und Abläufe am Pumpengehäuse 21, in dem z. B. ein Flügelrad 26 angeordnet ist. An seiner Rückseite ist das Pumpengehäuse 21 mit einem Druckdeckel 27 verschlossen, an der das Antriebswellengehäuse angebracht und durch die die Antriebswelle 22 vom Antrieb 23 zum Flügelrad 26 durchgeführt wird. Die Schwingungssensoren 11, 12 sind auf der Außenseite des Druckdeckels 27 schwingungsgekoppelt befestigt, z. B. angeschraubt.

Die Ausrichtung der Antriebswelle 22 (Ausrichtung der Drehachse) stellt eine Bezugsrichtung dar, zu der die Schwingungssensoren 11, 12 ausgerichtet sind. Der radiale Schwingungssensor 11 ist zur Messung von Schwingungen ausgelegt, die senkrecht auf der Bezugsrichtung stehen und entsprechend dem unteren Doppelpfeil radial verlaufen. Der axiale Schwingungssensor 12 ist entsprechend zur Messung von Schwingungen parallel zur Bezugsrichtung (siehe oberer Doppelpfeil) eingerichtet. Als Schwingungssensoren können vorteilhafterweise alle an sich bekannten Schwingungssensoren für richtungsselektive Körperschallmessungen verwendet werden. Diese enthalten eine in mindestens eine Richtung schwingfähige Sensormasse, deren Auslenkung beispielsweise kapazitiv detektiert und als Amplitudensignal an die Auswertungseinrichtung 13 gegeben wird.

Die erfindungsgemäße Kavitationsdetektion basiert auf einer Analyse des am Gehäuse, insbesondere am Druckdeckel 27, gemessenen Körperschalls. Dabei ergibt sich das ermittelte Körperschallspektrum aus der Faltung der breitbandigen Erregung (beeinflusst durch den Kavitationsprozess) mit der Übertragungsfunktion der Anlage, in diesem Fall der Pumpe oder einer Pumpenkomponente. Im Spektrum findet man neben den kinematischen Frequenzen (verursacht durch die Drehbewegung von Pumpenteilen - z. B. Antriebswelle oder Flügelrad) insbesondere Strukturresonanzen der Pumpe oder von Pumpenkomponenten oder mindestens ein Anregungsband durch eine Fremdanregung der strömungstechnischen Vorrichtung. In den verschiedenen Schwingungsrichtungen kommt es zu verschieden starken Erhöhungen der Strukturresonanzen. Die Anregung einer Strukturresonanz ist in Figur 2 beispielhaft mit Messergebnissen illustriert.

Die oberste Kurve von Figur 2 zeigt beispielhaft den Amplituden-Frequenzgang im Bereich einer Strukturresonanz, der mit den Schwingungssensoren 11, 12 am Druckdeckel 27 in axialer und radialer Richtung ermittelt wird, wenn keine Kavitation auftritt. Bei ansteigender Kavitationsstärke bis zu einem Wert des Förderhöhenabfalls (NPSH, Net Positive Suction Head = Nettoenergiehöhe, siehe DIN 24260, von 3%) tritt eine deutliche Erhöhung des Signals des axialen Schwingungssensors im Gegensatz zum radialen Sensor auf. Diese Zunahme wird bei noch weiterer Erhöhung der Kavitationsstärke bis zum Vollabriss verstärkt (siehe unterste Kurve in Figur 2). Die Frequenzangaben in Figur stellen lediglich Beispiele dar. Die Signalanalyse kann je nach Anwendungsfall in anderen Frequenzbereichen durchgeführt werden. Die Detektion von einem von außen angeregten Frequenzband (Anregungsband) würde ein entsprechendes Bild ergeben.

In der Auswertungseinrichtung 13 erfolgt eine Kennwertbildung (insbesondere Quotienten-, Produkt-, Summen- und/oder Differenzbildung) aus den radialen und axialen Schwingungsamplituden oder davon abgeleiteten Größen. Die Kennwertbildung braucht lediglich in einem Frequenzbereich zu erfolgen, in dem bei Kavitationsbildung eine richtungsselektive Verstärkung von Strukturresonanzen erfolgt. Als abgeleitete Schwingungsgrößen werden beispielsweise Mittelwerte der Schwingungsamplituden oder Effektivwerte (RMS-Werte) der Kennwertbildung unterzogen.

Zur Auswahl des interessierenden Frequenzbereiches der kavitationsbedingt erhöhten Strukturresonanz (oder des Anregungsbandes) werden schmalbandige Schwingungssensoren 11, 12 verwendet, die auf die Strukturresonanz abgestimmt sind. Alternativ enthält die Auswertungseinrichtung 13 für die Signale eines breitbandigen Schwingungssensors einen elektronischen Filter, der auf den Frequenzbereich der Strukturresonanz abgestimmt ist.

Zur weiteren Signalauswertung kann der ermittelte Kennwert aus Schwingungsamplituden oder abgeleiteten Größen mit einem vorbestimmten Referenzwert verglichen werden. Das Auftreten von Kavitation wird detektiert und insbesondere angezeigt, signalisiert und/oder mit zusätzlichen Betriebsparametern abgespeichert, wenn der ermittelte Kennwert (z. B. Quotient) den Referenzwert überschreitet.

Kennwerte zur Kavitationsdetektion können anstelle einer Quotientenberechnung durch eine andere Verknüpfung der Schwingungsamplituden gebildet werden, die allgemein z. B. Quotienten, Produkte, Summen, Differenzen und/oder andere mathematische Funktionen umfasst.

Wenn wie bei der illustrierten Messung an Kreiselpumpen der axiale Anteil der Strukturresonanz- oder Anregungsbandschwingungen signifikant ansteigt, kann es zur erfindungsgemäßen Kavitationsdetektion ausreichend sein, anstelle der Kennwertbildung lediglich einen Vergleich des axialen Signals mit einem Referenzwert durchzuführen. Bei Kalibrierung der Schwingungsmessung kann allein aus der Erhöhung des axialen Schwingungssignals im Bereich der Strukturresonanz eines Bauteils der zu überwachenden strömungstechnischen Vorrichtung das Auftreten von Kavitation abgeleitet werden.

Die in der vorstehenden Beschreibung, den Zeichnungen und den Ansprüchen offenbarten Merkmale der Erfindung können sowohl einzeln als auch in beliebiger Kombination für die Verwirklichung der Erfindung in ihren verschiedenen Ausgestaltungen von Bedeutung sein.

## Patentansprüche

1. Verfahren zur Kavitationsdetektion durch Schwingungsmessung an einer strömungstechnischen Vorrichtung (20),
wobei an mindestens einem Bauteil der strömungstechnischen Vorrichtung (20) Schwingungsmessungen durchgeführt werden, bei denen in einem vorbestimmten Frequenzbereich, in den eine Strukturresonanz des Bauteils oder ein von außen aufgeprägtes Frequenzband fällt, Schwingungsamplituden von Schwingungen in mindestens zwei verschiedenen Raumrichtungen gemessen und aus den Schwingungsamplituden oder davon abgeleiteten Größen mindestens ein für das Auftreten und/oder die Stärke von Kavitation charakteristischer Kennwert erfasst wird,
**dadurch gekennzeichnet, dass**
die Schwingungsmessungen mit mindestens zwei Sensoren zur richtungsselektiven Schwingungsmessung in mindestens zwei verschiedenen Schwingungsrichtungen durchgeführt werden.

2. Verfahren gemäß Anspruch 1, bei dem die Richtungen der Schwingungsmessungen parallel und senkrecht relativ zur Ausrichtung einer Antriebswelle der strömungstechnischen Vorrichtung (20) gewählt werden.

3. Verfahren gemäß Anspruch 1 oder 2, bei dem die Schwingungsmessungen mit breitbandigen Schwingungssensoren (11, 12) durchgeführt werden, deren Signale einer Filterung entsprechend dem vorbestimmten Frequenzbereich unterzogen werden.

4. Verfahren gemäß einem der Ansprüche 1 oder 2, bei dem die Schwingungsmessungen mit spektral schmalbandigen Sensoren (11, 12) durchgeführt werden, die zur resonanten Messung in dem vorbestimmten Frequenzbereich eingerichtet sind.

5. Verfahren gemäß einem der vorhergehenden Ansprüche, bei dem als Kennwert das Verhältnis der Schwingungsamplituden oder davon abgeleiteten Größen ermittelt wird.

6. Verfahren gemäß einem der vorhergehenden Ansprüche, bei dem die abgeleiteten Größen die Mittelwerte oder Effektivwerte von Schwingungsamplituden umfassen.

7. Verfahren gemäß einem der vorhergehenden Ansprüche, wobei die strömungstechnische Vorrichtung eine Kreiselpumpe (20) ist und an mindestens einem Bauteil (27) der Kreiselpumpe (20) eine richtungsselektive Schwingungsmessung parallel zur Ausrichtung einer Antriebswelle (22) der Kreiselpumpe durchgeführt wird, wobei in einem vorbestimmten Frequenzbereich, der eine Strukturresonanz des Bauteils (27) oder ein von außen aufgeprägtes Frequenzband enthält, axiale Schwingungsamplituden gemessen werden, und aus den axialen Schwingungsamplituden oder davon abgeleitete Größen ein für das Auftreten und/oder die Stärke von Kavitation charakteristischer Kennwert erfasst wird.

8. Vorrichtung zur Kavitationsdetektion, die eine Sensoreinrichtung (11, 12) und eine Auswertungseinrichtung (13, 14, 15) umfasst,
**dadurch gekennzeichnet, dass**
die Vorrichtung zur Durchführung eines Verfahrens gemäß einem der vorhergehenden Ansprüche eingerichtet ist und die Sensoreinrichtung zwei Sensoren zur richtungsselektiven Schwingungsmessung in mindestens zwei verschiedenen Schwingungsrichtungen an einem Bauteil einer strömungstechnischen Vorrichtung (20) aufweist.

## Claims

1. A method for detection of cavitation by vibration measurement on a fluidic apparatus (20),
wherein vibration measurements are carried out on least at one component of the fluidic apparatus (20), during which measurements vibration amplitudes of vibrations in at least two different directions in space are measured in a predetermined frequency range, in which a structural resonance of the component or an externally impressed frequency band falls, and at least one characteristic value which is characteristic of the occurrence and/or the degree of cavitation is acquired from the vibration amplitudes or magnitudes derived therefrom,
**characterized in that**
the vibration measurements are carried out with at least two sensors for directionally selective vibration measurement in at least two different vibration directions.

2. The method according to Claim 1, in which the directions of the vibration measurements are selected parallel and perpendicular relative to the orientation of a drive shaft of the fluidic apparatus (20).

3. The method according to Claim 1 or 2, in which the vibration measurements are carried out with broad-band vibration sensors (11, 12), the signals of which are subjected to filtering according to the predetermined frequency range.

4. The method according to any of Claims 1 and 2, in which the vibration measurements are carried out with spectrally narrow-band sensors (11, 12) which are set up for resonant measurement in the predetermined frequency range.

5. The method according to any one of the preceding Claims, in which the ratio of the vibration amplitudes or of magnitudes derived therefrom is established as the characteristic value.

6. The method according to any one of the preceding Claims, in which the derived magnitudes comprise the mean values or effective values of vibration amplitudes.

7. The method according to any one of the preceding Claims, wherein the fluidic apparatus is a centrifugal pump (20) and a directionally selective vibration measurement is carried out parallel to the orientation of a drive shaft (22) of the centrifugal pump on at least one component (27) of the centrifugal pump (20), wherein axial vibration amplitudes are measured in a predetermined frequency range, which includes a structural resonance of the component (27) or an externally impressed frequency band, and a characteristic value which is characteristic of the occurrence and/or the degree of cavitation is acquired from the axial vibration amplitudes or magnitudes derived therefrom.

8. An apparatus for detection of cavitation which comprises a sensor device (11, 12) and an evaluation device (13, 14, 15),
**characterized in that**
the apparatus is set up to carry out a method according to any one of the preceding Claims and the sensor device has two sensors for directionally selective vibration measurement in at least two different vibration directions on a component of a fluidic apparatus (20).

## Revendications

1. Procédé pour la détection de cavitation par mesure de vibrations sur un dispositif soumis à la mécanique des fluides (20), des mesures de vibrations étant effectuées sur au moins un composant du dispositif soumis à la mécanique des fluides (20), où, dans une plage de fréquences prédéfinie où est comprise une résonance structurelle du composant ou une bande de fréquences appliquée de l'extérieur, des amplitudes oscillatoires de vibrations sont mesurées dans au moins deux directions spatiales différentes, et où au moins une valeur caractéristique est déterminée pour la formation et/ou l'épaisseur de cavitation à partir des amplitudes oscillatoires ou de grandeurs dérivées de celles-ci,
**caractérisé**
**en ce que** les mesures de vibrations sont effectuées avec au moins deux capteurs pour la mesure directionnelle sélective de vibrations dans au moins deux directions d'oscillation différentes.

2. Procédé selon la revendication 1, où les directions des mesures de vibrations sont choisies parallèlement et perpendiculairement à la direction d'un arbre d'entraînement du dispositif soumis à la mécanique des fluides (20).

3. Procédé selon la revendication 1 ou 2, où les mesures de vibrations sont effectuées avec des capteurs de vibrations (11, 12) à bande large, dont les signaux sont soumis à une filtration en fonction de la plage de fréquences prédéfinie.

4. Procédé selon l'une des revendications 1 ou 2, où les mesures de vibrations sont effectuées avec des capteurs (11, 12) à bande spectrale étroite, réglés dans la plage de fréquences prédéfinie pour la mesure de résonance.

5. Procédé selon l'une des revendications précédentes, où le rapport des amplitudes oscillatoires ou des grandeurs dérivées de celles-ci est déterminé en tant que valeur caractéristique.

6. Procédé selon l'une des revendications précédentes, où les dérivées comprennent les valeurs moyennes ou les valeurs effectives des amplitudes oscillatoires.

7. Procédé selon l'une des revendications précédentes, où le dispositif soumis à la mécanique des fluides est une pompe centrifuge (20) et où une mesure directionnelle sélective de vibrations est effectuée parallèlement à la direction d'un arbre d'entraînement (22) de la pompe centrifuge (20) sur au moins un composant (27) de la pompe centrifuge (20), où, dans une plage de fréquences prédéfinie comprenant une résonance structurelle du composant (27) ou une bande de fréquences appliquée de l'extérieur, des amplitudes oscillatoires sont mesurées, et où une valeur caractéristique est déterminée pour la formation et/ou l'épaisseur de cavitation à partir des amplitudes oscillatoires axiales ou de grandeurs dérivées de celles-ci.

8. Système pour la détection de cavitation, comprenant un dispositif à capteurs (11, 12) et un dispositif d'analyse (13, 14, 15),
**caractérisé**
**en ce que** le système est réglé pour l'exécution d'un procédé selon l'une des revendications précédentes et en ce que le dispositif à capteurs comporte deux capteurs pour la mesure directionnelle sélective de vibrations dans au moins deux directions d'oscillation différentes sur un composant d'un dispositif soumis à la mécanique des fluides (20).
